# EUROPÄISCHE PATENTSCHRIFT

(11) **EP 1 398 484 B1**
(45) Veröffentlichungstag und Bekanntmachung des Hinweises auf die Patenterteilung: **11.11.2009**
(21) Anmeldenummer: 03020366.5
(22) Anmeldetag: 09.09.2003
(51) Int. Cl.: F02D 41/14, F02D 41/08, F02D 37/02

(54) **Verfahren zum Betreiben einer Brennkraftmaschine mit wahlweise zu- und abschaltbarem Zusatzaggregat**
Method for operating an internal combustion engine having an auxiliary unit which can be selectively activated and deactivated
Procédé de fonctionnement d'un moteur à combustion avec auxiliaire commutable

(30) Priorität: 10.09.2002 DE 10241885
(43) Veröffentlichungstag der Anmeldung: 17.03.2004
(73) Patentinhaber: Volkswagen AG, 38436 Wolfsburg (DE)
(72) Erfinder: Pelz, Norbert, 38479 Tappenbeck (DE); Schultalbers, Matthias, 38536 Meinersen/Ahnsen (DE); Sprysch, Andreas, 31234 Edemissen (DE); Braun, Holger, Dr., 38518 Gifhorn (DE); Von Der Ohe, Thomas, 38528 Adenbüttel (DE)
(74) Vertreter: Kandlbinder, Markus Christian

(56) Entgegenhaltungen:
- DE-A1- 4 305 573
- DE-A1- 10 015 921
- DE-A1- 19 715 774
- US-A- 4 898 005
- US-A- 5 046 924
- US-A- 5 419 294
- US-A- 5 666 917
- US-A- 5 752 387
- US-A- 5 765 527
- US-A- 6 035 652

## Beschreibung

Die Erfindung betrifft ein Verfahren zum Betreiben einer Brennkraftmaschine, insbesondere mit Kraftstoff-Direkteinspritzung, insbesondere Dieselmotor, insbesondere eines Kraftfahrzeuges, mit wenigstens einem durch die Brennkraftmaschine angetriebenen Zusatzaggregat und mit einer Momentenkoordination, welche zum Einstellen eines gewünschten Momentes entsprechende Parameter für einen Kraftstoffpfad, einen Zündungspfad und/oder einen Luftpfad bestimmt, wobei ein durch den Antrieb des Zusatzaggregates erzeugtes Aggregat Verlustmoment bestimmt und der Momentenkoordination übergeben wird, gemäß dem Oberbegriff des Anspruchs 1.

Bei Brennkraftmaschinen mit Kompressoraufladung ist ein Kompressor im Frischluftpfad angeordnet. Dieser Kompressor wird dabei beispielsweise mittels eines aus- und einkoppelbaren Riementriebes von einer Kurbelwelle angetrieben. Das bedeutet, dass das Anlaufmoment des Kompressors und die Leistung (Schleppmoment) des Kompressors von der Brennkraftmaschine aufgebracht wird. Insbesondere bei doppelt aufgeladenen Brennkraftmaschinen, bei denen der Kompressor lediglich zur Aufladung in einem unteren Drehzahlbereich dient, bis ein Abgasturbolader in der Lage ist, den gewünschten Ladedruck zur Verfügung zu stellen, kommt es zu einem häufigen Ab- und wieder Zuschalten des Kompressors. Das Zuschalten einer solchen Last kann dabei in unterschiedlichen Lastzuständen erforderlich sein, beispielsweise auch im Schubbetrieb. Hierbei ist es nachteilig, dass es zu unerwünschten Ungleichförmigkeiten der Drehzahl der Brennkraftmaschine durch die Laständerung kommt. Insbesondere bricht ggf. beim Zuschalten des Kompressors die Drehzahl ein.

Aus DE 100 15 921 A1 ist ein Verfahren zum Zuschalten eines Laders zur Förderung der Ladeluft in einer fremdgezündeten Brennkraftmaschine bekannt, wobei aus einem Kennfeld ein statisches Lastmoment des Laders in Abhängigkeit von Laderdrehzahl und Last bestimmt wird. Dieses statische Lastmoment wird direkt einer Zündsteuereinrichtung zugeführt, um eine Zündzeitpunktverschiebung nach spät zu erzeugen.

Der vorliegenden Erfindung liegt die Aufgabe zugrunde, ein Verfahren der obengenannten Art bzgl. der Komforteigenschaften der Brennkraftmaschine zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, dass in der Momentenkoordination das Aggregat-Verlustmoment in einem Steuergerät der Momentenkoordination zuerst als Momentenreserve und dann als Verlustmoment zu intern berechneten Verlustmomenten hinzu addiert wird, so dass die Parameter für Kraftstoffpfad, Zündungspfad und/oder Luftpfad derart verändert werden, dass eine Kompensation des Aggregat-Verlustmomentes erzielt wird.

Dies hat den Vorteil, dass das Verlustmoment des Zusatzaggregats im Betrieb und beim Ein- und Ausschalten berechnet und der Momentenstruktur zur Verfügung gestellt wird. Zusätzlich kann auch eine Kompensation im Schubbetrieb erfolgen.

Das Aggregat-Verlustmoment ist hierbei ein Einschaltmoment und ein Schleppmoment.

Um gerade in der Teillast ein ruckfreies Zuschalten des Zusatzaggregates, beispielsweise eines Kompressors, zu ermöglichen, erfolgt das Einschalten des Zusatzaggregates erst nach einem Vergleich des zusätzlich zu erzeugenden Aggregat-Verlustmoment mit von der Brennkraftmaschine darstellbaren Moment. Nach der Prüfung wird der optimale Zeitpunkt zum Einschalten des Zusatzaggregates ermittelt.

Um auch in Betriebsphasen ohne Momentenanforderung mit geschlossener Drosselklappe, beispielsweise im Schubbetrieb, eine Kompensation des Aggregat-Verlustmomentes zu erzielen, wird das Aggregat-Verlustmoment in eine minimale Sollfüllung umgerechnet und unter Umgehung der Momentenkoordination auf den Luftpfad gegeben, beispielsweise nach einer Füllungsvorsteuerung als Drosselklappenwinkelanhebung. Zweckmäßigerweise wird das Aggregat-Verlustmoment des Zusatzaggregates mit einem Verlustmoment der schiebenden Brennkraftmaschine verglichen und das Zusatzaggregat erst dann eingeschaltet, wenn das Aggregat-Verlustmoment mit einer öffnenden Drosselklappe der Brennkraftmaschine darstellbar ist.

Beispielsweise ist das Zusatzaggregat ein Kompressor, wobei als Aggregat-Verlustmoment ein Kompressor-Verlustmoment bestimmt wird.

In einer bevorzugten Ausführungsform wird das Kompressor-Verlustmoment aus einer Kompressordrehzahl n_{K}, einem Umgebungsdruck pᵤ und einem Druck p_{nK} in einem Luftansaugpfad der Brennkraftmaschine nach dem Kompressor berechnet.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
Fig. 1 eine schematische Darstellung des Luftpfades und einer Abgasseite einer doppelt aufgeladenen Brennkraftmaschine und

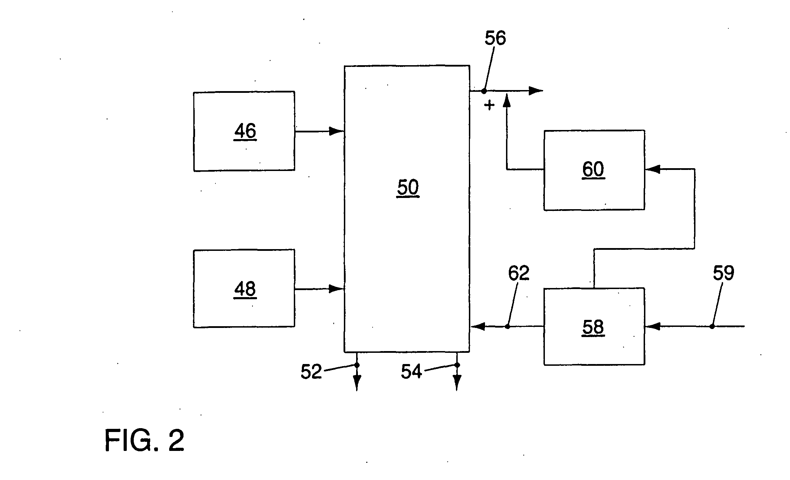

Fig. 2 eine schematische Darstellung einer Momentenkoordination einer Brennkraftmaschine mit Kompensation des Kompressor-Verlustmomentes.

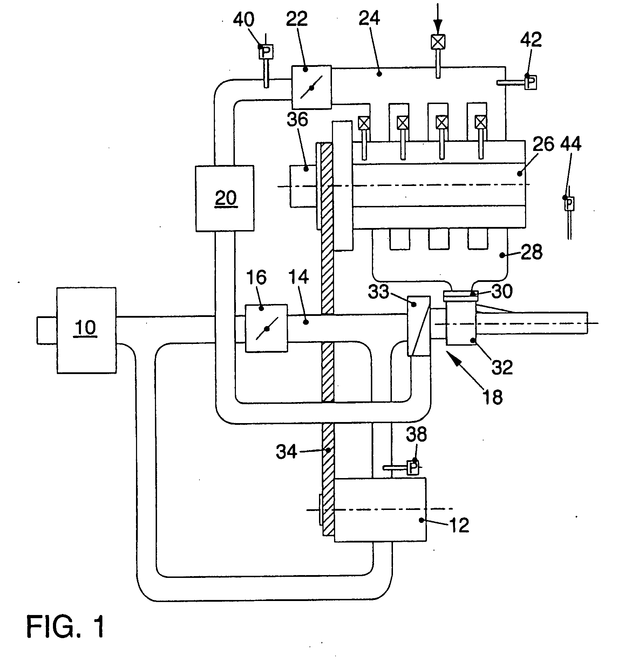

Das erfindungsgemäße Verfahren wird nachfolgend lediglich beispielhaft anhand einer doppelt aufgeladenen Brennkraftmaschine erläutert. Obwohl die Erfindung bei doppelt aufgeladenen Brennkraftmaschinen besondere Vorteile bietet, ist sie nicht auf doppelt aufgeladene Brennkraftmaschinen beschränkt. Wie aus Fig. 1 ersichtlich, umfasst die Brennkraftmaschine einen Frischluftpfad, in dem ein Luftfilter 10, ein Kompressor 12, ein den Kompressor 12 überbrückender Luftkanal 14, eine den Luftkanal 14 wahlweise verschließende Verdichtungsdrosselklappe 16, ein Abgasturbolader 18, ein Ladeluftkühler 20, eine Drosselklappe 22 und ein Saugrohr 24, welches in jeweilige Brennräume in einem Zylinderkurbelgehäuse 26 der Brennkraftmaschine mündet, angeordnet sind. An einem Abgaskrümmer 28 ist ein Wastegate 30 angeordnet, welches eine Turbine 32 des Abgasturboladers 18 mit einem Abgasstrom beaufschlagt. Der Abgasturbolader 18 umfasst ferner einen Verdichter 33. Ein Ausgang des Kompressors 12 mündet in einen Eingang des Abgasturboladers 18. Der Kompressor 12 wird über einen Riemen 34 von einer Kurbelwelle der Brennkraftmaschine angetrieben. Hierbei ist der Antrieb des Kompressors 12 mittels einer Kupplung 36, beispielsweise einer Magnetkupplung, wahlweise von der Kurbelwelle trennbar. Das Konzept dieser Anordnung liegt darin, in einem niedrigen Drehzahlbereich eine Aufladung durch den Kompressor 12 zu realisieren und ab einer bestimmten Drehzahl, ab der der Abgasturbolader 18 eine ausreichende Aufladung gewährleistet, den Kompressor 12 abzuschalten. Jeweilige Sensoren 38, 40, 42 und 44 messen jeweils einen Druck p_{vATL} vor dem Abgasturbolader 18, einen Druck p_{vDK} vor der Drosselklappe 22, einen Druck Pₛ im Saugrohr 24 und einen Umgebungsdruck pᵤ.

In Abhängigkeit von einem Fahrerwunsch 46 und einer Momentenanforderung 48 wirkt eine Momentenkoordination 50 in entsprechender Weise auf einen Kraftstoffpfad 52, einen Zündungspfad 54 und einen Luftpfad 56, um durch entsprechende Einstellung von Parametern, wie beispielsweise Zündwinkel, Drosselklappenstellung, eingespritzte Kraftstoffmenge, Einspritzzeitpunkt, Luftfüllmenge der Zylinder etc., ein gewünschtes Motormoment zu erzielen. In einem Block 58 wird aus den Eingangswerten 59 Kompressordrehzahl n_{K}, Umgebungsdruck pᵤ und Druck p_{vATL}. vor dem Abgasturbolader 18 ein Kompressor-Verlustmoment bestimmt und ebenfalls der Momentenkoordination 50 zugeführt. Dieses Kompressor-Verlustmoment ist im Falle des Zuschaltens des Kompressors 12 ein Einschaltmoment und während des Betriebs mit Kompressor 12 ein Schleppmoment des Kompressors 12. Die Momentenkoordination 50 ist derart ausgebildet, dass diese aus dem von Block 58 kommenden Kompressor-Verlustmoment beispielsweise eine Erhöhung einer Füllmenge der Zylinder derart bestimmt, dass diese Erhöhung der Füllmenge der Zylinder zu einem zusätzlichen Moment führt, welches das Verlustmoment durch das Zuschalten des Kompressors 12 gerade kompensiert. Auch Momenten erhöhende Änderungen der Parameter von Kraftstoffpfad 52 und Zündungspfad 54 werden optional ggf. durchgeführt.

Um im Teillastbetrieb den Einschaltruck zu kompensieren, wird zu jedem Zeitpunkt das maximal mit Grundladedruck darstellbare Moment und das im jeweiligen Betriebspunkt benötigte Moment des Einschaltrucks berechnet. Sobald das Motormoment dem Grundladedruck abzüglich des Einschaltmomentes entspricht, wird das Zündwinkelsollmoment unter Berücksichtigung anderer Zündwinkeleingriffe eingefroren, der Zündwinkeleingriff freigegeben und auf Füllungsebene das Einschaltruckmoment als Momentenreserve aufgebaut. Sobald die Reserve aufgebaut ist, wird der Kompressor zugeschaltet und der modellierte Verlustmomentverlauf des Kompressorzuschaltens auf das im Steuergerät in der Momentenkoordination berechnete Verlustmoment addiert.

Im Schubbetrieb ist jedoch kein Moment gefordert und die Drosselklappe geschlossen. Die Momentenkoordination 50 ist derart ausgebildet, dass im Schubbetrieb der Luftpfad blockiert ist. Um auch im Schubbetrieb eine Kompensation des Kompressor-Verlustmomentes zu erzielen, ist zusätzlich ein Block 60 vorgesehen, welcher einen minimalen Luftbedarf zur Kompensation des Kompressor-Verlustmomentes bestimmt und direkt, d.h. unter Umgehung der Momentenkoordination 50, auf einen entsprechenden Wert der Füllung für den Luftpfad aufaddiert, beispielsweise in Form einer Änderung einer Winkelstellung der Drosselklappe 22 der Brennkraftmaschine. Hierdurch wird bei Zuschaltung des Kompressors 12 im Schubbetrieb beispielsweise die Drosselklappe 22 etwas geöffnet, so dass das Kompressor-Verlustmoment gerade kompensiert wird. Damit ist auch im Schubbetrieb ein unerwünschter Einschaltruck aufgrund der Zuschaltung des Kompressors 12 vermieden.

Das Schleppmoment und das Einschaltmoment des Kompressors 12 werden im Block 58 lastabhängig berechnet. Außerhalb des Schubbetriebes wird das berechnete Kompressor-Verlustmoment des Kompressors 12 als Verlustmoment bzw. Momentenreserve 62 der Momentenkoordination 50 übergeben und auf intern im Steuergerät der Momentenkoordination 50 berechnete Verlustmomente aufaddiert. Im Schubbetrieb wird in Block 60 das Schleppmoment in eine minimale Sollfüllung umgerechnet und nach der Füllungsvorsteuerung über den Luftpfad 56 als Drosselklappenwinkelanhebung ausgegeben. Damit wird der Einschaltruck verhindert, da diese Füllung das Schleppmoment um den Betrag verringert, welcher dem zusätzlichen Einschalt-Verlustmoment durch den Kompressor 12 entspricht.

## Patentansprüche

1. Verfahren zum Betreiben einer Brennkraftmaschine, insbesondere mit Kraftstoff Direkteinspritzung, insbesondere Dieselmotor, insbesondere eines Kraftfahrzeuges, mit wenigstens einem durch die Brennkraftmaschine angetriebenen Zusatzaggregat und mit einer Momentenkoordination, welche zum Einstellen eines gewünschten Momentes entsprechende Parameter für einen Kraftstoffpfad, einen Zündungspfad und/oder einen Luftpfad bestimmt, wobei ein durch den Antrieb des Zusatzaggregates erzeugtes Aggregat-Verlustmoment bestimmt und der Momentenkoordination übergeben wird,
**dadurch gekennzeichnet,**
**dass** in der Momentenkoordination das Aggregat-Verlustmoment in einem Steuergerät der Momentenkoordination zuerst als Momentenreserve und dann als Verlustmoment zu intern berechneten Verlustmomenten hinzu addiert wird, so dass die Parameter für Kraftstoffpfad, Zündungspfad und/oder Luftpfad derart verändert werden, dass eine Kompensation des Aggregat-Verlustmomentes erzielt wird.

2. Verfahren nach Anspruch 1, **dadurch gekennzeichnet, dass** das Aggregat-Verlustmoment ein Einschaltmoment und/oder ein Schleppmoment ist.

3. Verfahren nach Anspruch 1 oder 2, **dadurch gekennzeichnet, dass** vor dem Einschalten des Zusatzaggregates das Aggregat-Verlustmoment mit einem von der Brennkraftmaschine darstellbaren Moment verglichen und hieraus ein Zeitpunkt zum Einschalten des Zusatzaggregat bestimmt wird.

4. Verfahren nach einem der vorhergehenden Ansprüche, **dadurch gekennzeichnet, dass** in einem Betriebszustand der Brennkraftmaschine ohne Momentenanforderung, insbesondere in einem Schubbetrieb, das Aggregat-Verlustmoment in eine minimale Sollfüllung umgerechnet und unter Umgehung der Momentenkoordination auf den Luftpfad gegeben wird.

5. Verfahren nach Anspruch 4, **dadurch gekennzeichnet, dass** das Aggregat Verlustmoment des Zusatzaggregates mit einem Verlustmoment der schiebenden Brennkraftmaschine verglichen wird und das Zusatzaggregat erst dann eingeschaltet wird, wenn das Aggregat-Verlustmoment mit einer öffnenden Drosselklappe der Brennkraftmaschine darstellbar ist.

6. Verfahren nach Anspruch 4 oder 5, **dadurch gekennzeichnet, dass** die minimale Sollfüllung nach einer Füllungsvorsteuerung als Drosselklappenwinkelanhebung ausgegeben wird.

7. Verfahren nach wenigstens einem der vorhergehenden Ansprüche, **dadurch gekennzeichnet, dass** ein Antrieb des Zusatzaggregates betriebsabhängig von der Brennkraftmaschine ab- bzw. angekoppelt wird.

8. Verfahren nach wenigstens einem der vorhergehenden Ansprüche, **dadurch gekennzeichnet, dass** das Zusatzaggregat ein Kompressor ist, wobei als Aggregat-Verlustmoment ein Kompressor-Verlustmoment bestimmt wird.

9. Verfahren nach Anspruch 8, **dadurch gekennzeichnet, dass** das Kompressor Verlustmoment aus einer Kompressordrehzahl n_{K}, einem Umgebungsdruck pᵤ und einem Druck p_{nK} in einem Luftansaugpfad der Brennkraftmaschine nach dem Kompressor berechnet wird.

## Claims

1. Method for operating an internal combustion engine, in particular with fuel direct injection, in particular a diesel engine, in particular of a motor vehicle, having at least one auxiliary unit which is driven by the internal combustion engine and having a torque coordinator which, in order to set a desired torque, determines corresponding parameters for a fuel path, an ignition path and/or an air path, with a unit torque loss generated as a result of the driving of the auxiliary unit being determined and transmitted to the torque coordinator,
**characterized**
**in that**, in the torque coordinator, in a control unit of the torque coordinator, the unit torque loss is added firstly as a torque reserve and then as a torque loss to internally calculated torque losses, such that the parameters for fuel path, ignition path and/or air path are varied in such a way as to provide compensation of the unit torque loss.

2. Method according to Claim 1, **characterized in that** the unit torque loss is an activation torque and/or a drag torque.

3. Method according to Claim 1 or 2, **characterized in that**, before the activation of the auxiliary unit, the unit torque loss is compared with a torque which can be provided by the internal combustion engine, and a time for the activation of the auxiliary unit is determined therefrom.

4. Method according to one of the preceding claims, **characterized in that**, in an operating state of the internal combustion engine without a torque demand, in particular in an overrun mode, the unit torque loss is converted into a minimum nominal charge and is supplied, bypassing the torque coordinator, to the air path.

5. Method according to Claim 4, **characterized in that** the unit torque loss of the auxiliary unit is compared with a torque loss of the overrunning internal combustion engine and the auxiliary unit is first activated when the unit torque loss can be provided by means of an opening throttle flap of the internal combustion engine.

6. Method according to Claim 4 or 5, **characterized in that** the minimum nominal charge is output, after charge pilot control, as a throttle flap angle increase.

7. Method according to at least one of the preceding claims, **characterized in that** the auxiliary unit is decoupled or coupled in terms of drive as a function of the operation of the internal combustion engine.

8. Method according to at least one of the preceding claims, **characterized in that** the auxiliary unit is a compressor, with a compressor torque loss being determined as a unit torque loss.

9. Method according to Claim 8, **characterized in that** the compressor torque loss is calculated from a compressor rotational speed n_{K}, an ambient pressure pᵤ and a pressure p_{nK} in an air intake path of the internal combustion engine downstream of the compressor.

## Revendications

1. Procédé pour faire fonctionner un moteur à combustion interne, notamment avec injection directe de carburant, en particulier un moteur diesel, en particulier d'un véhicule automobile, comprenant au moins un auxiliaire entraîné par le moteur à combustion interne et une coordination de couple, qui, pour l'ajustement d'un couple souhaité, détermine des paramètres correspondants pour un chemin de carburant, un chemin d'allumage et/ou un chemin d'air, un couple de perte de l'auxiliaire produit par l'entraînement de l'auxiliaire étant déterminé et transmis à la coordination de couple,
**caractérisé en ce que**
dans la coordination de couple, le couple de perte de l'auxiliaire est d'abord ajouté dans un appareil de commande de la coordination de couple sous forme de réserve de couple et ensuite est ajouté sous forme de couple de perte à des couples de perte calculés intérieurement, de sorte que les paramètres pour le chemin de carburant, le chemin d'allumage et/ou le chemin d'air soient modifiés de telle sorte qu'une compensation du couple de perte de l'auxiliaire soit obtenue.

2. Procédé selon la revendication 1, **caractérisé en ce que** le couple de perte d'auxiliaire est un couple d'enclenchement et/ou un couple de glissement.

3. Procédé selon la revendication 1 ou 2, **caractérisé en ce qu'**avant l'enclenchement de l'auxiliaire, le couple de perte de l'auxiliaire est comparé à un couple pouvant être réalisé par le moteur à combustion interne et on en déduit un instant d'enclenchement de l'auxiliaire.

4. Procédé selon l'une quelconque des revendications précédentes, **caractérisé en ce que** dans un état de fonctionnement du moteur à combustion interne sans demande de couple, en particulier en mode de poussée, le couple de perte de l'auxiliaire est converti en un remplissage de consigne minimal et est fourni au chemin d'air en contournant la coordination de couple.

5. Procédé selon la revendication 4, **caractérisé en ce que** le couple de perte de l'auxiliaire est comparé à un couple de perte du moteur à combustion interne en mode de poussée et l'auxiliaire est alors seulement enclenché quand le couple de perte de l'auxiliaire peut être réalisé avec un papillon d'étranglement s'ouvrant du moteur à combustion interne.

6. Procédé selon la revendication 4 ou 5, **caractérisé en ce que** le remplissage de consigne minimal est émis après une pré-commande de remplissage en tant que soulèvement d'angle du papillon d'étranglement.

7. Procédé selon au moins l'une quelconque des revendications précédentes, **caractérisé en ce qu'**un entraînement de l'auxiliaire est désaccouplé ou accouplé en fonction du mode de fonctionnement du moteur à combustion interne.

8. Procédé selon au moins l'une quelconque des revendications précédentes, **caractérisé en ce que** l'auxiliaire est un compresseur, un couple de perte de compresseur étant déterminé en tant que couple de perte de l'auxiliaire.

9. Procédé selon la revendication 8, **caractérisé en ce que** le couple de perte du compresseur est calculé à partir d'un régime du compresseur n_{K}, d'une pression de l'environnement pu, et d'une pression p_{nK} dans un chemin d'aspiration d'air du moteur à combustion interne après le compresseur.
